# EUROPÄISCHE PATENTSCHRIFT

(11) **EP 2 043 215 B1**
(45) Veröffentlichungstag und Bekanntmachung des Hinweises auf die Patenterteilung: **02.01.2019**
(21) Anmeldenummer: 08015498.2
(22) Anmeldetag: 03.09.2008
(51) Int. Cl.: H02G 3/32

(54) **Leitungsführungskanal mit Montagevorrichtung**
Conductive channel with mounting device
Canal de guidage de conduite doté d'un dispositif de montage

(30) Priorität: 27.09.2007 DE 202007013520 U
(43) Veröffentlichungstag der Anmeldung: 01.04.2009
(73) Patentinhaber: Tehalit GmbH, 67716 Heltersberg (DE)
(72) Erfinder: Schwarz, Jürgen, 67705 Trippstadt (DE)
(74) Vertreter: Nuss, Laurent

(56) Entgegenhaltungen:
- EP-A2- 0 161 226
- WO-A1-89/12340
- JP-A- 2005 151 733

## Beschreibung

Die vorliegende Erfindung betrifft einen Leitungsführungskanal mit einer Montagevorrichtung zu dessen Befestigung.

Leitungsführungskanäle dienen der Aufnahme von Kabeln und Leitungen oder zum Geräteeinbau und sind Bestandteil moderner Gebäudekomplexe oder Büro- oder Ausstellungsräume. Wandkanäle werden in Gebäuden häufig unterhalb der Fensterbänke montiert und bieten dadurch zahlreiche Anschlussmöglichkeiten zur Strom- und Datenversorgung der jeweiligen Arbeitsplätze. Bisher wurden solche Installationskanäle (Geräteeinbaukanäle, Verdrahtungskanäle, Kabelkanäle) direkt an die Wand geschraubt. Eine solche Montage ist jedoch zeitaufwendig und erfordert Werkzeuge. Oftmals besteht jedoch der Wunsch, Leitungsführungskanäle zum Geräteeinbau oder zur Geräteergänzung wieder zu entfernen oder gegebenenfalls durch einen anderen Kabelkanaltyp zu ersetzen, vorzugsweise ohne Zuhilfenahme von Werkzeug. Eine schnelle Montage und Demontage von Kabelkanälen ist ferner insbesondere bei Messen und Ausstellungen interessant.

Solche Leitungsführungskanäle sind beispielsweise in der JP 2005 151 733 A, der EP 0 161 266 A2 oder der WO 89/12340 A1 beschrieben. Diese Leitungsführungskanäle sehen eine Montagekonsole zur Befestigung des Kanalunterteils vor. Auch bei diesen Leitungsführungskanälen ist die Montage recht zeitaufwendig.

Der vorliegenden Erfindung liegt vor diesem Hintergrund die Aufgabe zugrunde, einen verbesserten Leitungsführungskanal bereitzustellen, der auf flexible Weise auf eine Montagevorrichtung ohne Zuhilfenahme von Werkzeug aufrastbar ist.

Diese Aufgabe wird gelöst durch einen Leitungsführungskanal gemäß Anspruch 1.

Der erfindungsgemäße Leitungsführungskanal besteht aus einem Unterteil mit Boden und Seitenwänden und gegebenenfalls einem Oberteil. Der Kanal dient der Aufnahme von Kabel und Leitungen sowie von Geräteeinbauteilen, wie Steckdosen, Adapter, Schalter etc. Am Unterteil befinden sich in regelmäßigen Abständen angeordnete Stiftaufnahmen, die vorzugsweise in mehreren parallel verlaufenden Reihen angeordnet sind. Über diese Stiftaufnahmen wird das Kanalunterteil mit einer Montagekonsole verbunden. Die Montagekonsole umfasst Clip-Stifte, die beim Aufsetzen des Kanalunterteils auf die Montagekonsole durch die Stiftaufnahmen des Kanalunterteils gedrückt werden. Die Clip-Stifte werden gebildet durch einen bügelartigen Stützkörper und zwei seitlich nach unten und im spitzen Winkel nach außen geneigte federnde Rastschenkel. Vorzugsweise umfasst die Montagekonsole eine Schiene, an der die Clip-Stifte in ihrer Position verstellbar sind.

Beim Aufsetzen des Kanalunterteils auf die Montagekonsole werden die beiden federnden Rastschenkel zusammengedrückt, so dass der Clip-Stift mit den beiden Rastschenkeln durch die Stiftaufnahme hindurchgedrückt wird. Sobald das freie Ende des Clipstiftes durch den Boden des Kanalunterteils vollständig hindurchgedrückt ist, federn die Rastschenkel nach außen zurück. Die freien Schenkelenden der Rastschenkel stützen sich dabei gegen das Kanalunterteil ab, so dass das Kanalunterteil einen festen Sitz mit der Montagekonsole erhält. Für die Montage des Kanals ist keinerlei Werkzeug notwendig, wodurch eine wesentliche Zeit- und Materialersparnis erzielt wird. Anhand der vorzugsweise verstellbaren Clip-Stifte ist es möglich, die Höhe des Kanals genau zu justieren.

Vorzugsweise sind die federnden Rastschenkel der Clip-Stifte unterschiedlich lang ausgebildet. Dies hat den Vorteil, dass verschiedene Kanalunterteile mit unterschiedlichen Wandstärken mit derselben Montagevorrichtung verwendet werden können. Dadurch ist die Montagevorrichtung für verschiedene Kabelkanaltypen oder Geräteinbaukanaltypen universal einsetzbar.

In einer bevorzugten Ausführungsform umfasst die Montagekonsole mit den Clip-Stiften wenigstens einen, vorzugsweise zwei federnde Ausgleichsschenkel. In Verbindung mit den verschiedenen Längen der Rastschenkel können so Leitungsführungskanäle mit unterschiedlichen Wandstärken auf dieselbe Montagekonsole montiert werden. Vorzugsweise sind die Stiftaufnahmen des Kanalunterteils so ausgeformt, dass ein Verrasten in falscher Orientierung vermieden wird. Die Struktur der Stiftaufnahmen ist in den Zeichnungen gezeigt und Bestandteil der vorliegenden Erfindung.

Der erfindungsgemäße Leitungsführungskanal mit Montagevorrichtung hat den Vorteil, dass eine Montage ohne Werkzeug erfolgen kann. Dadurch ist eine schnellere Montage des Leitungsführungskanals möglich. Ein weiterer Vorteil besteht darin, dass die Montagekonsole durch die Ausgestaltung unterschiedlich langer federnder Rastschenkel und der federnden Ausgleichsschenkel für verschiedene Kabelkanaltypen mit unterschiedlichen Wandstärken verwendet werden kann. Bei einer bevorzugten Ausführungsform ist die Montagekonsole mit einem Tragarm und einem Montagefuß verbunden, dessen Länge über ein Einstellrad veränderbar ist. Der Montagefuß kann direkt an eine Wand befestigt werden. Über den Tragarm können beispielsweise herausragende Fensterbänke ausgeglichen werden.

Mit umfasst vom erfinderischen Gedanken sind auch nicht federnde Rastschenkel, die nach dem Eindrücken des Kanalunterteils nach außen gebogen werden.

Verschiedene Ausführungsformen des erfindungsgemäßen Leitungsführungskanals sind in den folgenden Zeichnungen gezeigt. Darin zeigen:
- Fig. 1: eine isometrische Darstellung eines an einer Montagekonsole befestigten Leitungsführungskanals;
- Fig. 2: eine isometrische Darstellung eines Ausschnittes der Montagekonsole;
- Fig. 3: einen Clip-Stift im eingerasteten Zustand in einem Kanalunterteil;
- Fig. 4: ein Montagemodell zur Befestigung des Leitungsführungskanals mit Montagefuß.

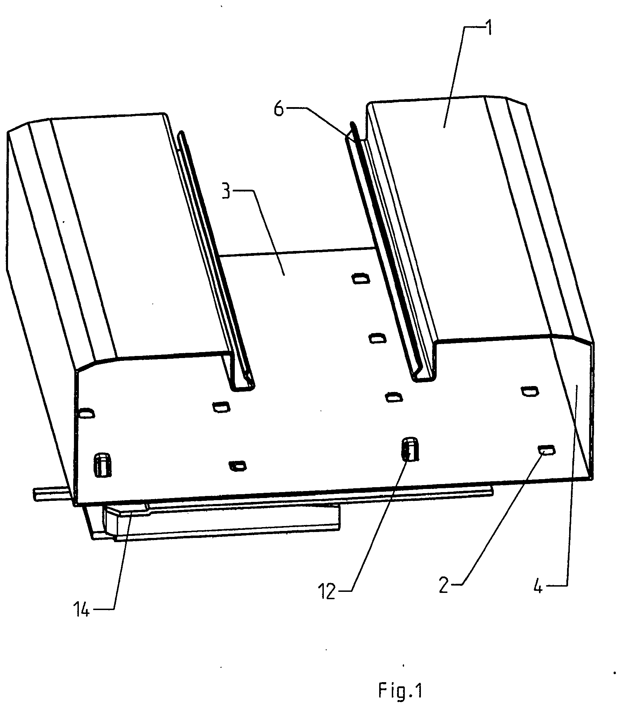

In Fig. 1 ist eine Ausführungsform eines erfindungsgemäßen Leitungsführungskanals gezeigt. Der Kanal selbst besteht aus einem Kanalunterteil 1 mit Boden 3 und zwei U-förmig nach oben ausgeformten Seitenwänden 4, die gegebenenfalls Deckelhalteprofile 6 aufweisen, sowie gegebenenfalls einem Kanaloberteil (nicht dargestellt). Am Boden 3 des Kanalunterteils 1 befinden sich bevorzugt in regelmäßigen Abständen Stiftaufnahmen 2, die vorzugsweise in parallelen Reihen angeordnet sind. Die Stiftaufnahmen 2 und die Clip-Stifte 12 sind in ihrem Profil vorzugsweise so ausgestaltet, dass der Leitungsführungskanal nur in einer bestimmten Orientierung mit der Montagekonsole 14 verrastet werden kann, wodurch eine Fehlmontage vermieden wird. Vorzugsweise ist der Längssteg 21 des Stützkörpers 18, der die Front- und Rückschenkel 19 verbindet, länger als der Quersteg, der die beiden seitlichen Rastschenkel 13 verbindet.

Die Montagekonsole 14 umfasst einen oder mehrere Clip-Stifte 12, die durch die Stiftaufnahme 2 des Kanalunterteils 1 durchgreifen und den Leitungsführungskanal mit dieser verrasten. Vorzugsweise sind die Clip-Stifte 12 entlang der Montagekonsole 14 an einer Schiene beweglich (nicht gezeigt). Dadurch können einzelne Clip-Stifte 12 genau in Position gebracht werden.

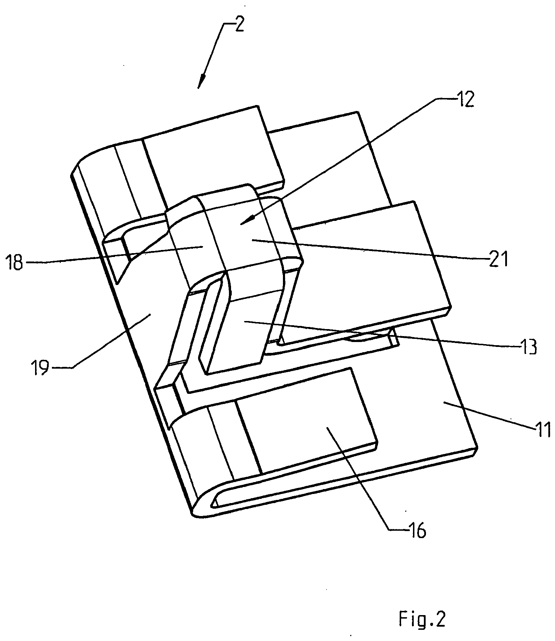

In Fig. 2 ist der Aufbau der Clip-Stifte 12 genauer gezeigt. Der Clip-Stift 12 ist an einer Basis 11 ausgebildet und besteht aus einem bügelartigen U-förmigen Stützkörper 18, der aus zwei durch einen Längssteg 21 verbundenen Front- und Rückschenkeln 19 gebildet wird. Die Übergangskanten des Längsstegs 21 sind vorzugsweise abgerundet, um das Einführen der Clip-Stifte 12 in die Stiftaufnahmen 2 zu erleichtern. Der Rückschenkel 19 des Clip-Stiftes 12 geht in einen rechtwinkelig zu diesem angeordneten Führungsschenkel über, der in etwa parallel zur Basis 11 verläuft. Seitlich sind an dem Clip-Stift 12 zwei nach unten und etwa im spitzen Winkel geneigte federnde Rastschenkel 13 ausgebildet.

Vorzugsweise sind die beiden Rastschenkel 13 unterschiedlich lang ausgebildet. Für Stahlblechkanäle kann es beispielsweise erforderlich sein, dass der Rastschenkel 13 eine größere Länge aufweist als ein Rastschenkel 13 für andere Brüstungskanäle. Das Montageelement 14 besteht vorzugsweise aus einer Basis 11 und weist links- und rechtsseitig zwei nach innen gebogene federnde Ausgleichsschenkel 16 auf, die quer zu den Rastschenkeln 13 angeordnet sind.

Durch die unterschiedliche Länge der beiden federnden Rastschenkel 13 und der federnden Ausgleichsschenkel 16 ist es möglich, die Montagekonsole 14 für verschiedene Brüstungskanäle und Stahlblechkanäle mit unterschiedlichen Wandstärken zu verwenden, ohne dass ein Austausch der Montagekonsole 14 erfolgen muss. Wenigstens ein freies Ende eines Rastschenkels 13 stützt sich im verasteten Zustand gegen den Boden 3 des Kanalunterteils 1 ab. Handelt es sich hierbei um den längeren Rastschenkel 13, so hängt der kürzere Rastschenkel 13 in der Luft. Stützt sich der kürzere Rastschenkel 13 ab, so ist der längere Rastschenkel 13 in der Stiftaufnahme 2.

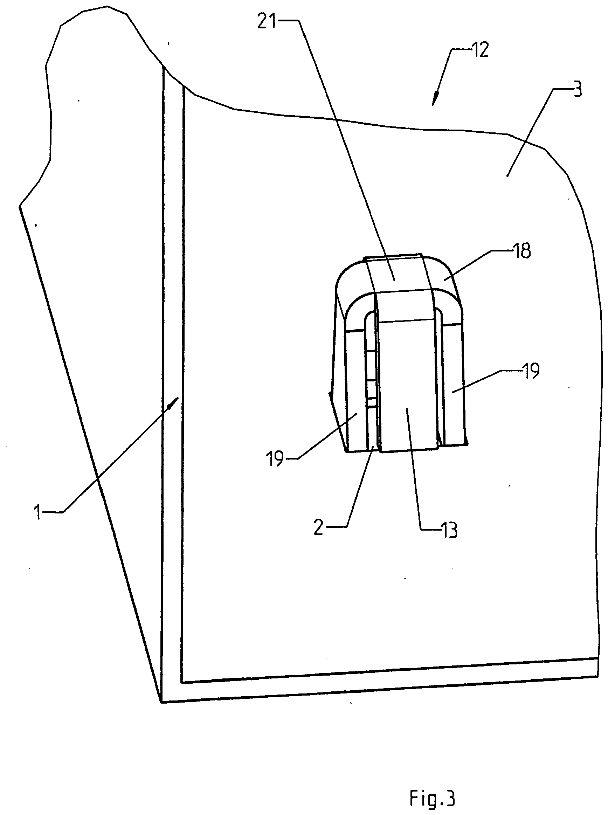

In Fig. 3 erkennt man den Clip-Stift 12 im verrasteten Zustand am Kanalunterteil 1. Das freie Ende des Clip-Stiftes 12 ist vollständig durch die Stiftaufnahme 2 des Bodens 3 von dem Kanalunterteil 1 geführt. Zum Aufrasten wird das Kanalunterteil 1 lediglich auf die Montagekonsole 14 gedrückt. Dadurch werden die beiden Rastschenkel 13 leicht nach innen gedrückt und federn zurück, sobald der Clip-Stift 12 vollständig durch die Stiftaufnahme 2 geführt ist. Das freie Schenkelende des Rastschenkels 13 stützt sich gegen den Boden 3 des Kanalunterteils 1 ab und verhindert dadurch das Herausfallen des Kanalunterteils 1. Zum Entfernen des Leitungsführungskanals müssen die beiden Rastschenkel 13 lediglich mit der Hand oder mit Werkzeug nach innen in die Stiftaufnahmen 2 unter gleichzeitigem Herausziehen des Kanalunterteils 1 gedrückt werden.

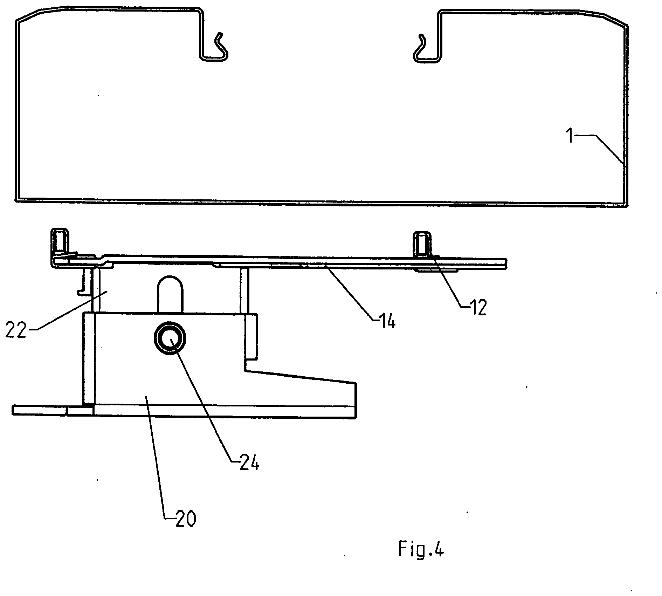

In Fig. 4 erkennt man eine Ausführungsform der erfindungsgemäßen Montagevorrichtung als Montageskizze, bestehend aus Montagekonsole 14 mit den darin ausgeformten Clip-Stiften 12 sowie einem mit der Montagekonsole 14 verbundenen Tragarm 22, der über ein Einstellrad 24 in dessen Länge veränderbar ist. Der Tragarm 22 ist mit einem Montagefuß 20 verbunden. Der Montagefuß 20 kann zur wandseitigen oder deckenseitigen Montage mit dem Gebäudeteil verbunden werden.

## Patentansprüche

1. Leitungsführungskanal mit Montagevorrichtung, umfassend:
- gegebenenfalls ein Kanaloberteil,
- ein Kanalunterteil (1) mit
- einem Boden (3)
- mit darin eingebrachten Stiftaufnahmen (2)
- zwei Seitenwänden (4), gegebenenfalls mit Deckelhalteprofilen (6),
- eine Montagekonsole (14) zur Befestigung des Kanalunterteils (1),
- an der Montagekonsole (14) befinden sich Clip-Stifte (12), die in die Stiftaufnahmen (2) des Kanalunterteils (1) durchgreifen,
**gekennzeichnet durch** die Merkmale:
- die Clip-Stifte (12) werden gebildet durch
- einen bügelartigen Stützkörper (18) mit über einen Längssteg (21) verbundenen Front- und Rückschenkeln (19), und
- wenigstens zwei seitliche nach unten und im spitzen Winkel nach außen geneigte federnde Rastschenkel (13), wobei zumindest ein freies Schenkelende eines Rastschenkels (13) sich im eingerasteten Zustand gegen das Kanalunterteil (1) abstützt.

2. Leitungsführungskanal nach Anspruch 1, **dadurch gekennzeichnet, dass** die beiden Rastschenkel (13) unterschiedlich lang sind.

3. Leitungsführungskanal nach einem der vorhergehenden Ansprüche, **dadurch gekennzeichnet, dass** die Montagekonsole (14) zwei federnde Ausgleichsschenkel (16) umfasst.

4. Leitungsführungskanal nach Anspruch 3, **dadurch gekennzeichnet, dass** die Ausgleichsschenkel (16) beidseitig des Clip-Stiftes (12) und quer zu den Rastschenkeln (13) angeordnet sind.

5. Leitungsführungskanal nach einem der vorhergehenden Ansprüche, **dadurch gekennzeichnet, dass** der Längssteg (21) des Stützkörpers (18), der die Front- und Rückschenkel (19) verbindet, länger ist als der Quersteg, der die beiden Rastschenkel (13) verbindet.

6. Leitungsführungskanal nach einem der vorhergehenden Ansprüche, **dadurch gekennzeichnet, dass** die Übergangskanten des Längsstegs (21) zu den Front- und Rückschenkel (19) abgerundet sind.

7. Leitungsführungskanal nach einem der vorhergehenden Ansprüche, **dadurch gekennzeichnet, dass** die Montagekonsole (14) mit einem Trägerarm (22) und einem Montagefuß (20) verbunden ist, dessen Länge über ein Einstellrad (24) verstellbar ist.

## Claims

1. Line routing channel with a mounting device, comprising:
- possibly an upper channel part,
- a lower channel part (1) with
- a base (3)
- with pin receptacles (2) incorporated therein
- two side walls (4), possibly with cover holding profiles (6),
- a mounting bracket (14) for fastening the lower channel part (1),
- on the mounting bracket (14) there are clip pins (12), which reach into the pin receptacles (2) of the lower channel part (1),
**characterized by** the features:
- the clip pins (12) are formed by
- a bow-like supporting body (18) with front and rear legs (19) connected by way of a longitudinal cross-piece (21), and
- at least two lateral resilient engaging legs (13), inclined downwards and at an acute angle outwards, at least a free leg end of an engaging leg (13) supporting itself against the lower channel part (1) in the engaged state.

2. Line routing channel according to Claim 1, **characterized in that** the two engaging legs (13) are of different lengths.

3. Line routing channel according to one of the preceding claims, **characterized in that** the mounting bracket (14) comprises two resilient compensating legs (16) .

4. Line routing channel according to Claim 3, **characterized in that** the compensating legs (16) are arranged on both sides of the clip pin (12) and transversely in relation to the engaging legs (13).

5. Line routing channel according to one of the preceding claims, **characterized in that** the longitudinal cross-piece (21) of the supporting body (18), which connects the front and rear legs (19), is longer than the transverse cross-piece, which connects the two engaging legs (13).

6. Line routing channel according to one of the preceding claims, **characterized in that** the transitional edges of the longitudinal cross-piece (21) to the front and rear legs (19) are rounded.

7. Line routing channel according to one of the preceding claims, **characterized in that** the mounting bracket (14) is connected to a carrier arm (22) and a mounting foot (20), the length of which is adjustable by means of a setting wheel (24).

## Revendications

1. Canal de guidage de ligne avec dispositif de montage, comprenant :
- éventuellement une partie supérieure de canal,
- une partie inférieure de canal (1) avec
- un fond (3)
- avec des logements de broches (2) ménagés dans ce fond,
- deux parois latérales (4), éventuellement avec des profilés (6) de maintien de couvercle,
- une console de montage (14) pour la fixation de la partie inférieure de canal (1),
- des broches à clip (12), qui s'engagent à travers les logements de broches (2) de la partie inférieure de canal (1), se trouvent sur la console de montage (14), **caractérisé par** les caractéristiques suivantes :
- les broches à clip (12) sont formées par
- un corps de soutien (18) du genre étrier, avec des branches avant et arrière (19) reliées par l'intermédiaire d'une partie de liaison longitudinale (21), et
- au moins deux branches élastiques d'encliquetage latérales (13), inclinées vers l'arrière et sous un angle aigu vers l'extérieur, sachant qu'au moins une extrémité libre de branche d'une branche d'encliquetage (13) s'appuie dans l'état encliqueté contre la partie inférieure de canal (1).

2. Canal de guidage de ligne selon la revendication 1, **caractérisé en ce que** les deux branches d'encliquetage (13) sont de longueurs différentes.

3. Canal de guidage de ligne selon l'une des revendications précédentes, **caractérisé en ce que** la console de montage (14) comprend deux branches de compensation élastiques (16).

4. Canal de guidage de ligne selon la revendication 3, **caractérisé en ce que** les branches de compensation (16) sont disposées de part et d'autre de la broche à clip (12) et transversalement par rapport aux branches d'encliquetage (13).

5. Canal de guidage de ligne selon l'une des revendications précédentes, **caractérisé en ce que** la partie de liaison longitudinale (21) du corps de soutien (18), laquelle relie les branches avant et arrière (19), est plus longue que la partie de liaison transversale qui relie les deux branches d'encliquetage (13).

6. Canal de guidage de ligne selon l'une des revendications précédentes, **caractérisé en ce que** les arêtes de transition de la partie de liaison longitudinale (21) vers les branches avant et arrière (19) sont arrondies.

7. Canal de guidage de ligne selon l'une des revendications précédentes, **caractérisé en ce que** la console de montage (14) est reliée à un bras porteur (22) et à un support de montage (20) dont la longueur peut être réglée au moyen d'une molette de réglage (24).
